# EUROPÄISCHE PATENTANMELDUNG

(11) **EP 4 775 448 A2**
(43) Veröffentlichungstag der Anmeldung: **15.07.2026**
(21) Anmeldenummer: 25219798.3
(22) Anmeldetag: 01.12.2025
(51) Int. Cl.: B60P 1/54, B62D 21/00, B66C 23/44

(54) **ANORDNUNG ZUR MONTAGE EINES KRANS AN EINEM FAHRZEUG**

(30) Priorität: 19.12.2024 DE 102024139046
(71) Anmelder: Franz Xaver Meiller Fahrzeug- und Maschinenfabrik - GmbH & Co KG, 80997 München (DE)
(72) Erfinder: Hofmann, Maximilian, 80997 München (DE); Dornauer, Karl, 80997 München (DE)
(74) Vertreter: Weickmann & Weickmann PartmbB

(57) **Zusammenfassung**

Die vorliegende Erfindung betrifft eine Anordnung (10) zur Montage eines Krans an einem Fahrzeug mit einem Fahrgestell, umfassend einen Hilfsrahmen (12), welcher eine Längsrichtung (L) der Anordnung (10) sowie eine dazu senkrechte Breitenrichtung (B) definiert und zwei Längsträger (14, 16) umfasst, welche wiederum jeweils einen Seitenabschnitt (14a, 16a) und einen Obergurt (14b, 16b) um-fassen und dazu eingerichtet sind, sich im Wesentlichen entlang einer Längsrichtung des Fahrzeugs zu erstrecken, und zwei Kran-Seitenplatten (18, 20), welche jeweils dazu eingerichtet sind, mit einem der Längsträger (14, 16) und ggf. dem Fahrgestell verbunden zu sein und jeweils wenigstens eine Bridentasche (22) zum Montieren von Kranbriden (106) des Krans (102) umfassen. Hierbei sind erfindungsgemäß die Kran-Seitenplatten (18, 20) jeweils mehrteilig ausgeführt, wobei ein erster Teil (18a, 20a) unmittelbar mit dem jeweiligen Längsträger (14, 16) verbunden ist und ein zweiter Teil (18b, 20b) mit dem ersten Teil (18a, 20a) verbunden ist und die wenigstens eine Bridentasche (22) umfasst. Ferner betrifft die Erfindung ein Fahrzeug mit einer solchen Anordnung und einem Kran sowie ein Verfahren zum Montieren des Krans an einem solchen Fahrzeug.

## Beschreibung

Die vorliegende Erfindung betrifft eine Anordnung zur Montage eines Krans an einem Fahrzeug mit einem Fahrgestell, ein Fahrzeug mit einem Fahrgestell und einem Kran, welches eine derartige Anordnung umfasst, sowie ein Verfahren zum Montieren des Krans an dem entsprechenden Fahrzeug.

Es sind verschiedene Typen von Fahrzeugen bekannt, die als Aufbauten einen Kran umfassen, welcher zum Handhaben von schweren Lasten im Bereich des Fahrzeugs eingesetzt werden kann, beispielsweise Kipperfahrzeuge, bei denen zwischen dem Führerhaus und dem Kippaufbau ein solcher Kran zum Be- und Entladen der Ladefläche installiert ist.

In bereits bekannten Typen von Fahrzeugen wird hierbei zur Montage des Krans an dem Fahrzeugkörper des Fahrzeugs beidseitig an der Außenseite eines Hilfsrahmens eine jeweilige Kran-Seitenplatte angeschweißt, an die wiederum individuelle Bridenrollen oder Bridentaschen zur Aufnahme der Kranbriden und damit zur Befestigung des Krans an dem Fahrgestell des Fahrzeugs angeschweißt werden. Weiterhin findet in derartigen bekannten Anordnungen eine Verklotzung des Krans in der Regel durch ein Nut-Federsystem an der Außenseite der Kran-Seitenplatte statt, was einen erhöhten Montageaufwand mit sich bringt und, ebenso wie das Anschweißen der Kran-Seitenplatten, eine Zerstörung von Lackoberflächen am Ladekran und den Seitenplatten beim Anschweißen des Federblechs zur Verklotzung hervorrufen kann.

Weiterhin ist beispielsweise aus der DE 10 2021 112 470 A1 eine Anordnung zur Montage eines Krans an einem Fahrzeug mit einem Fahrgestell bekannt, in welcher Kran-Seitenplatten mittels eines Lochmusters an den Längsträgern des Hilfsrahmens angeschraubt werden können, sodass nachträgliche Schweißarbeiten überflüssig werden. Zudem ist in dieser aus dem Stand der Technik bekannten Anordnung ein Querträger zur Verklotzung des Krans zwischen den beiden Längsträgern des entsprechenden Hilfsrahmens vorgesehen.

Es zeigt sich jedoch in der Praxis, dass bei einem Aufbau einer derartigen Anordnung die Montage der Krankonsolen sehr aufwendig ist, da hierzu bereits am Fahrzeug installierte Fahrzeugaggregate zunächst einmal wieder demontiert werden müssen, um Zugriff auf die entsprechenden Anbringungspunkte der Kran-Seitenplatten zu erhalten, beispielsweise Batteriekästen oder diverse Tanks. Ferner ist in sämtlichen bisher bekannten gattungsgemäßen Anordnungen die Verklotzung des entsprechenden Krans jeweils sehr aufwendig, da die Verklotzungspositionen schwer zu erreichen sind. Dementsprechend besteht ein Bedarf nach einer weitergebildeten Anordnung zur Montage eines Krans an einem Fahrzeug, durch welche die entsprechende Montage vereinfacht wird und insbesondere das zwischenzeitliche Demontieren von externen Fahrzeugaggregaten überflüssig gemacht und der Zugriff auf jeweilige Verklotzungspositionen vereinfacht werde kann.

Zur Lösung dieser Aufgabe und zur Behebung der Nachteile des eben beschriebenen Standes der Technik wird erfindungsgemäß zunächst eine Anordnung zur Montage eines Krans an einem Fahrzeug mit einem Fahrgestell vorgeschlagen, umfassend einen Hilfsrahmen, welcher eine Längsrichtung der Anordnung sowie eine dazu senkrechte Breitenrichtung definiert, und welcher zwei Längsträger umfasst, welche wiederum jeweils einen Seitenabschnitt und einen Obergurt umfassen und dazu eingerichtet sind, sich im Wesentlichen entlang einer Längsrichtung des Fahrzeugs zu erstrecken, und zwei Kran-Seitenplatten, welche jeweils dazu eingerichtet sind, mit einem der Längsträger und gegebenenfalls dem Fahrgestell verbunden zu sein und jeweils wenigstens eine Bridentasche zum Montieren von Kranbriden des Krans umfassen. Hierbei wird erfindungsgemäß im Rahmen eines ersten Aspekts der vorliegenden Erfindung zunächst einmal vorgeschlagen, eine derartige gattungsgemäße Anordnung derart weiterzubilden, dass die Kran-Seitenplatten jeweils mehrteilig ausgeführt sind, wobei ein erster Teil unmittelbar mit dem jeweiligen Lastträger verbunden ist und ein zweiter Teil mit dem ersten Teil verbunden ist und die wenigstens eine Bridentasche umfasst.

Durch diese Untertrennung der Kran-Seitenplatten in der erfindungsgemäß vorgeschlagenen Art werden diese in einen fahrgestellseitigen sowie einen hilfsrahmenseitigen Teil aufgeteilt. Dementsprechend wird es ermöglicht, den fahrgestellseitigen Teil direkt bei der Chassisfertigung des entsprechenden Fahrzeugs zu montieren, während der hilfsrahmenseitige Teil mit den zugehörigen Bridentaschen auch erst zu einem späteren Zeitpunkt angebracht werden kann. Somit wird ebenfalls ermöglicht, die Montage der Krankonsolen bereits vor der Montage von zusätzlichen Fahrzeugaggregaten durchzuführen und damit die entsprechenden Abläufe in eine standardisierte Bandmontage zu integrieren. Insbesondere kann während des Aufbaus hierdurch eine Schnittstelle für den späteren Anbau der hilfsrahmenseitigen Teile geschaffen werden, die zu diesem Zeitpunkt das Demontieren von in diesem Bereich angeordneten Fahrzeugaggregaten ersparen kann.

Als alternative oder zusätzliche Maßnahme zur Vereinfachung der Montage eines Krans an einem Fahrzeug wird gemäß einem zweiten Erfindungsaspekt ferner eine Weiterbildung einer gattungsgemäßen Anordnung mit den oben beschriebenen Merkmalen vorgeschlagen, in welcher die Kran-Seitenplatten, gegebenenfalls die nach der oben beschriebenen Art vorzusehenden zweiten Teile davon, an ihrer Oberseite mit einem Nutenraster versehen sind, welches dazu eingerichtet ist, ein formschlüssiges Gegenstück an dem zu montierenden Kran zu dessen Verklotzung aufzunehmen. Dementsprechend wird an dieser Stelle alternativ oder zusätzlich zu der bisher durchgeführten Verklotzung an einem Querträger eine weitere Schnittstelle an der Krankonsole selbst geschaffen, wobei das erfindungsgemäß vorzusehende Nutenraster ein Kammprofil bildet, welches die individuelle Verklotzung an einer Mehrzahl von Positionen in Fahrzeuglängsrichtung entlang der Krankonsolen ermöglicht. Ein entsprechendes Gegenstück kann hierbei an dem Ladekran an einer geeigneten Position vorgesehen und insbesondere angeschweißt sein. Hierdurch wird, verglichen mit einer Verklotzung an einem Querträger, eine vereinfachte Zugänglichkeit der entsprechenden Verklotzungspositionen erzielt, da diese nunmehr nicht mehr zentral unterhalb des Krans, sondern an seiner Außenseite vorgesehen sind und dementsprechend bei einer Montage deutlich einfacher zu erreichen sind.

Bei der Unterteilung der Kran-Seitenplatten in der oben beschriebenen erfindungsgemäßen Weise können sich insbesondere die ersten Teile in vertikaler Richtung nach unten über die zweiten Teile hinaus erstrecken und/oder sich die zweiten Teile in vertikaler Richtung nach oben über die ersten Teile hinaus erstrecken. Hierdurch kann bei der Montage der Krankonsolen die Plattenhöhe der entsprechenden Komponente zunächst einmal dadurch niedrig gehalten werden, dass sich die ersten Teile nicht in demselben Maße wie die zweiten Teile vertikal nach oben erstrecken, sodass in dem vorgelagerten Montageschritt des Anbringens der ersten Teile die Überstande davon minimiert werden können. Dies vereinfacht erneut die Integration dieses Arbeitsschritts in den Aufbauvorgang des entsprechenden Fahrzeugs, während durch sich weiter vertikal nach oben erstreckende zweite Teile die Bridentaschen davon in einem Höhenbereich positioniert werden können, in welchem eine vereinfachte Endmontage des entsprechenden Krans ermöglicht wird.

Weiterhin soll darauf hingewiesen sein, dass die Seitenabschnitte der Längsträger des Hilfsrahmens, die ersten Teile und/oder die zweiten Teile der Kran-Seitenplatten jeweilige Lochmuster umfassen können, mittels welcher ein Anschrauben der Kran-Seitenplatten an den Längsträgern in einer Mehrzahl von Konfigurationen ermöglicht ist. Hierdurch wird nicht nur die Flexibilität hinsichtlich der Montageposition der entsprechenden Kran-Seitenplatten sowie letztlich des Krans erhöht, sondern es kann durch den Verzicht auf Schweißvorgänge auch verhindert werden, dass eine Beschädigung der Lackierung des Hilfsrahmens oder ähnlichem bei der Montage des Krans auftreten kann.

Weiterhin kann wenigstens einer der ersten Teile der Kran-Seitenplatten an seiner Unterseite wenigstens einen Ausschnitt aufweisen, in welchem er sich weniger weit nach unten erstreckt, um an dieser Stelle einen erhöhten Bauraum für externe Komponenten zur Verfügung stellen zu können.

Zudem ist es denkbar, wenigstens einen der zweiten Teile der Kran-Seitenplatten selbst ebenfalls mehrteilig auszubilden, wobei jeder dieser Teile des entsprechenden zweiten Teils wenigstens eine der Bridentaschen umfasst, sodass bezüglich der relativen Montage dieser mehreren Teile des entsprechenden zweiten Teils bezogen auf die Längsrichtung des Hilfsrahmens ebenfalls eine erhöhte Flexibilität geschaffen werden kann.

Wenngleich, wie oben angesprochen, einer der Aspekte der vorliegenden Erfindung darin besteht, ein Nutenraster an der Oberseite der Kran-Seitenplatten zur Verklotzung des Krans bereitzustellen, so kann die erfindungsgemäße Vorrichtung dennoch zusätzlich wenigstens einen Querträger zur Verklotzung des Krans umfassen, welcher sich zwischen den beiden Längsträgern erstreckt und an seiner Oberseite mit wenigstens einer Nut versehen ist, welche zur Aufnahme von wenigstens einem an dem Kran bereitgestellten Gegenelement eingerichtet ist. Auf diese Weise kann eine Mehrzahl von Verklotzungspunkten des Krans an dem Fahrzeug geschaffen werden, um dessen Montage noch sicherer gestalten zu können und die gegebenenfalls auftretenden Querkräfte gleichmäßiger auf den Hilfsrahmen übertragen zu können.

Des Weiteren können die Bridentaschen dazu eingerichtet sein, eine Montage der Kranbriden in einer Mehrzahl von Positionen in Längsrichtung der Anordnung zu ermöglichen, beispielsweise indem diese ebenfalls mit einem Lochmuster versehen sind und hinsichtlich ihrer Abmessungen in Längsrichtungen größer ausgebildet sind als die Kranbriden eines entsprechenden Krans, sodass innerhalb der Längserstreckung der Bridentaschen die Kranbriden an unterschiedlichen Positionen montiert werden können.

Gemäß einem weiteren Aspekt betrifft die vorliegende Erfindung ein Fahrzeug mit einem Fahrgestell, insbesondere ein Kipperfahrzeug, umfassend eine erfindungsgemäße Anordnung der eben beschriebenen Art, sowie einen Kran, welcher mittels seiner Kranbriden in den Bridentaschen der Anordnung montiert und gegebenenfalls an dem Nutenraster und/oder dem Querträger verklotzt ist.

Des Weiteren betrifft die vorliegende Erfindung ein Verfahren zum Montieren des Krans an einem solchen Fahrzeug, umfassend die Schritte eines Montierens der ersten Teile der Kran-Seitenplatten an jeweils einem der Längsträger und gegebenenfalls dem Fahrgestell im Rahmen einer Chassisfertigung, eines Montierens weiterer Fahrzeugaggregate in einem Bereich in Breitenrichtung des Fahrzeugs außerhalb der Kran-Seitenplatten und eines Montierens der zweiten Teile der Kran-Seitenplatten an den ersten Teilen ohne zwischenzeitliche Demontage der weiteren Fahrzeugaggregate.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet werden.

Diese zeigen im Einzelnen:
- Figur 1: eine isometrische Ansicht einer erfindungsgemäßen Anordnung zur Montage eines Krans an einem Fahrzeug mit einem Fahrgestell;
- Figur 2: die Anordnung aus Figur 1 in einer Draufsicht;
- Figur 3: eine Detailansicht der Kran-Seitenplatten der Anordnung aus Figur 1 in einer isometrischen Ansicht; und
- Figur 4: eine isometrische Ansicht der Anordnung aus Figur 1 mit einem daran montierten Unterteil eines Krans an einem erfindungsgemäßen Fahrzeug.

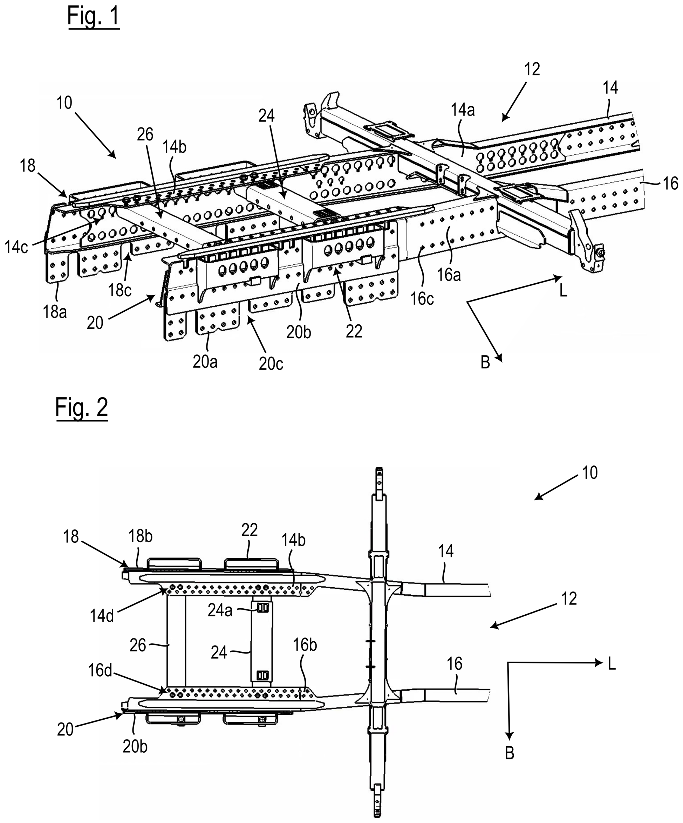

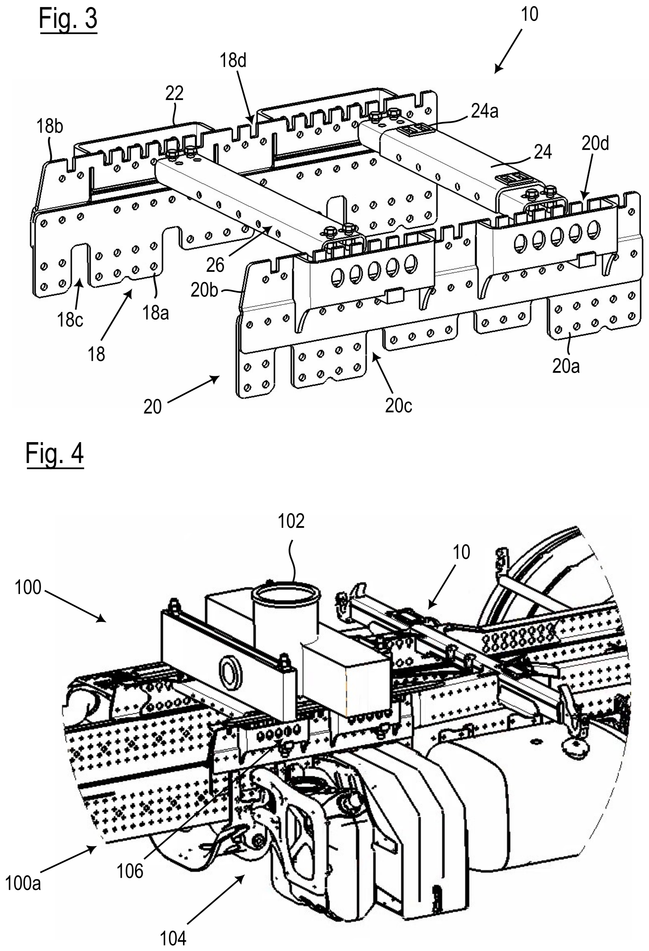

In der Figur 1 ist zunächst eine erfindungsgemäße Anordnung zur Montage eines Krans an einem Fahrzeug mit einem Fahrgestell in einer isometrischen Ansicht dargestellt und ganz allgemein mit Bezugszeichen 10 bezeichnet. Dieselbe Anordnung 10 ist in Figur 2 erneut in einer Draufsicht gezeigt, wobei aus Gründen der Übersichtlichkeit an dieser Stelle zunächst auf eine Darstellung weiterer Komponenten des Fahrzeugs und insbesondere auch des Fahrgestells verzichtet worden ist. Es wird jedoch an einigen Stellen Bezug hierauf genommen und auf die weiter unten beschriebene Figur 4 verwiesen, welche die Anordnung 10 an einem Fahrzeug 100 zusammen mit einem Unterteil eines daran montierten Krans 102 zeigt. Des Weiteren sei darauf hingewiesen, dass ein Teil der Anordnung 10 aus Figur 1 erneut in einer ähnlichen isometrischen Darstellung in Figur 3 dargestellt ist, um einzelne Merkmale davon hervorzuheben.

Die erfindungsgemäße Anordnung 10 umfasst hierbei zunächst einen Hilfsrahmen 12, der eine Längsrichtung L sowie eine dazu senkrechte Breitenrichtung B definiert, welche jeweils einer Front-Heck-Richtung beziehungsweise einer Breitenrichtung des mit der Anordnung 10 ausgerüsteten Fahrzeugs entsprechen.

Der Hilfsrahmen 12 umfasst hierbei zwei Längsträger 14, 16, welche wiederum jeweils einen Seitenabschnitt 14a, 16a und einen Obergurt 14b, 16b umfassen. Insbesondere ist in Figur 1 zu erkennen, dass sowohl die Seitenabschnitte 14a, 16a als auch die Obergurte 14b, 16b mit jeweiligen Lochmustern versehen sind, welche mit den Bezugszeichen 14c, 16c beziehungsweise 14d, 16d bezeichnet sind.

Mittels der an den Seitenabschnitten 14a, 16a vorgesehenen Lochmuster 14c, 16c sind nun jeweilige Kran-Seitenplatten 18 und 20 mit den beiden Längsträgern 14, 16 an geeigneten Positionen verschraubt. Hierbei sind in der in den Figuren gezeigten Ausführungsform die beiden Kran-Seitenplatten 18, 20 jeweils zweiteilig ausgebildet und umfassen somit jeweilige erste und zweite Teile 18a, 18b beziehungsweise 20a, 20b. Insbesondere sind hierbei die ersten Teile 18a, 20a unmittelbar mit dem jeweiligen Längsträger 14, 16 verbunden, während die zweiten Teile 18b, 20b mit den ersten Teilen 18a, 20a verbunden sind und jeweils zwei Bridentaschen 22 umfassen. Diese Bridentaschen 22 sind selbst ebenfalls wieder mit einem Lochmuster versehen, um eine Montage des Krans in einer Mehrzahl von Positionen bezogen auf die Längsrichtung L innerhalb der Bridentaschen oder auch eine Montage von unterschiedlichen Kränen mit abweichenden Abständen ihrer Kranbriden mittels einer einzelnen Anordnung 10 zu ermöglichen.

Wie beispielsweise auch noch einmal aus der Detailansicht in Figur 3 deutlich wird, sind sämtliche der Teile 18a, 18b, 20a, 20b der beiden Kran-Seitenplatten 18 und 20 mit jeweiligen Lochmustern versehen, welche eine Verbindung untereinander sowie mit den Längsträgern 14 und 16 in unterschiedlichen Positionen, bezogen auf die Längsrichtung L, davon ermöglichen. Auch durch diese Maßnahme wird sowohl die Kombination der Anordnung 10 mit einer Mehrzahl von unterschiedlichen Modellen von Kränen als auch eine variable relative Positionierung davon entlang der Längsrichtung L ermöglicht. Weiterhin ist zu erkennen, dass sich die ersten Teile 18a, 20a in vertikaler Richtung nach unten über die zweiten Teile 18b, 20b hinaus erstrecken und sich die zweiten Teile 18b, 20b in vertikaler Richtung nach oben über die ersten Teile 18a, 20a hinaus erstrecken.

Ferner ist gezeigt, dass die ersten Teile 18a, 20a an ihren Unterseiten jeweilige Ausschnitte 18c, 20c aufweisen, in welchen sie sich jeweils weniger weit nach unten erstrecken, um an diesen Stellen zusätzlichen Bauraum für in der Umgebung der Kran-Seitenplatten 18 und 20 befindliche externe Komponenten des Fahrzeugs zu schaffen. In ähnlicher Weise sind an den Oberseiten der zweiten Teile 18b, 20b Nutenraster 18d, 20d vorgesehen, welche dazu vorgesehen sind, eine formschlüssige Verklotzung des an dem Hilfsrahmen zu montierenden Krans mittels geeigneter Gegenstücke zu ermöglichen.

Eine ähnliche Funktion erfüllt auch der in den Figuren 1 bis 3 gezeigte erste Querträger 24, welcher an seiner Oberseite mit zwei Nuten 24a versehen ist, welche ebenfalls ein Verklotzen des Krans mittels geeigneter Gegenelemente ermöglicht. Dem hingegen ist der zweite Querträger 26 ohne eine derartige Nut ausgebildet und dient dementsprechend lediglich einer Abstützung bzw. Verbindung der beiden Längsträger 14, 16 untereinander.

Figur 4 zeigt nun zuletzt einen Abschnitt des entsprechenden Fahrzeugs 100 mit einem Fahrgestell 100a, an welchem die Anordnung 10 angebracht ist, wobei in dieser Ansicht auch bereits ein Kran 102 an der Anordnung montiert ist, von welchem jedoch aus Gründen der Übersichtlichkeit lediglich schematisch ein unterer Abschnitt dargestellt ist. Weiterhin ist in Figur 4 zu erkennen, dass sich in Breitenrichtung B außerhalb der Längsträger 14, 16 und damit der Kran-Seitenplatten 18 und 20 weitere Komponenten oder Fahrzeugaggregate 104 des Fahrzeugs 100 befinden, beispielsweise Tanks oder ähnliches.

Um nun bei einer Montage der Kran-Seitenplatten an den Längsträgern 14, 16 nicht zunächst die Komponenten 104 von dem Fahrzeugkörper demontieren zu müssen, ist die erfindungsgemäße Anordnung in der eben beschriebenen Weise mit jeweils zweiteiligen Kran-Seitenplatten 18, 20 ausgerüstet, von welchen während einer Chassisfertigung zunächst einmal lediglich die ersten Teile 18a, 20a an dem jeweiligen Längsträger 14, 16 angeschraubt werden können. Zu einem späteren Zeitpunkt können dann die Komponenten 104 montiert werden, so dass hiernach eine Endmontage der zweiten Teile 18b, 20b und anschließend des Krans 102 möglich ist, ohne dass zwischenzeitlich die Komponenten 104 demontiert werden müssten.

Wie ebenfalls zu erkennen ist, ist in dem in Figur 4 gezeigten Zustand der Kran 102 mittels Kranbriden 106 in den Bridentaschen 22 der Anordnung 10 montiert und mittels nicht zu erkennenden Gegenstücken bzw. Gegenelementen an den Nutenrastern 18d, 20d und der Nut 24a verklotzt.

## Patentansprüche

1. Anordnung (10) zur Montage eines Krans (102) an einem Fahrzeug (100) mit einem Fahrgestell (100a), umfassend:
- einen Hilfsrahmen (12), welcher eine Längsrichtung (L) der Anordnung (10) sowie eine dazu senkrechte Breitenrichtung (B) definiert und zwei Längsträger (14, 16) umfasst, welche wiederum jeweils einen Seitenabschnitt (14a, 16a) und einen Obergurt (14b, 16b) umfassen und dazu eingerichtet sind, sich im Wesentlichen entlang einer Längsrichtung des Fahrzeugs (100) zu erstrecken; und
- zwei Kran-Seitenplatten (18, 20), welche jeweils dazu eingerichtet sind, mit einem der Längsträger (14, 16) und ggf. dem Fahrgestell (100a) verbunden zu sein und jeweils wenigstens eine Bridentasche (22) zum Montieren von Kranbriden (106) des Krans (102) umfassen;
**dadurch gekennzeichnet, dass** die Kran-Seitenplatten (18, 20) jeweils mehrteilig ausgeführt sind, wobei ein erster Teil (18a, 20a) unmittelbar mit dem jeweiligen Längsträger (14, 16) verbunden ist und ein zweiter Teil (18b, 20b) mit dem ersten Teil (18a, 20a) verbunden ist und die wenigstens eine Bridentasche (22) umfasst.

2. Anordnung (10) nach dem Oberbegriff und ggf. dem Kennzeichen von Anspruch 1,
wobei die Kran-Seitenplatten (18, 20), ggf. die zweiten Teile (18b, 20b) davon, an ihrer Oberseite mit einem Nutenraster (18d, 20d) versehen sind, welches dazu eingerichtet ist, ein formschlüssiges Gegenstück an dem zu montierenden Kran (102) zu dessen Verklotzung aufzunehmen.

3. Anordnung (10) nach Anspruch 1 oder Anspruch 2,
wobei sich die ersten Teile (18a, 20a) in vertikaler Richtung nach unten über die zweiten Teile (18b, 20b) hinaus erstrecken und/oder sich die zweiten Teile (18b, 20b) in vertikaler Richtung nach oben über die ersten Teile (18a, 20a) hinaus erstrecken.

4. Anordnung (10) nach einem der vorhergehenden Ansprüche,
wobei die Seitenabschnitte (14a, 16a) der Längsträger (14, 16) des Hilfsrahmens (12), die ersten Teile (18a, 20a) und/oder die zweiten Teile (18b, 20b) jeweilige Lochmuster (18c, 20c) umfassen, mittels welcher ein Anschrauben der Kran-Steinplatten (18, 20) an den Längsträgern (14, 16) in einer Mehrzahl von Konfigurationen ermöglicht ist.

5. Anordnung (10) nach einem der vorhergehenden Ansprüche,
wobei wenigstens einer der ersten Teile (18a, 20a) an seiner Unterseite wenigstens einen Ausschnitt (18c, 20c) aufweist, in welchem er sich weniger weit nach unten erstreckt.

6. Anordnung (10) nach einem der vorhergehenden Ansprüche,
wobei wenigstens einer der zweiten Teile (18a, 20a) selbst ebenfalls mehrteilig ausgebildet ist, wobei jeder dieser Teile wenigstens eine der Bridentaschen (22) umfasst.

7. Anordnung (10) nach einem der vorhergehenden Ansprüche,
ferner umfassend wenigstens einen Querträger (24) zur Verklotzung des Krans (102), welcher sich zwischen den beiden Längsträgern (14, 16) erstreckt und an seiner Oberseite mit wenigstens einer Nut (24a) versehen ist, welche zur Aufnahme von wenigstens einem an dem Kran (102) bereitgestellten Gegenelement eingerichtet ist.

8. Anordnung (10) nach einem der vorhergehenden Ansprüche,
wobei die Bridentaschen (22) dazu eingerichtet sind, eine Montage der Kranbriden (106) in einer Mehrzahl von Positionen in Längsrichtung (L) der Anordnung (10) zu ermöglichen.

9. Fahrzeug (100) mit einem Fahrgestell (100a), insbesondere Kipperfahrzeug, umfassend:
- eine Anordnung (10) nach einem der vorhergehenden Ansprüche; und
- einen Kran (102), welcher mittels seiner Kranbriden (106) in den Bridentaschen (22) der Anordnung (10) montiert und ggf. an dem Nutenraster (18d, 20d) und/oder dem Querträger (24) verklotzt ist.

10. Verfahren zum Montieren des Krans (102) an dem Fahrzeug (100) nach dem vorhergehenden Anspruch, umfassend die Schritte:
- Montieren der ersten Teile (18a, 20a) der Kran-Seitenplatten (18, 20) an jeweils einem der Längsträger (14, 16) und ggf. dem Fahrgestell (100a) im Rahmen einer Chassisfertigung;
- Montieren weiterer Fahrzeugaggregate (104) in einem Bereich in Breitenrichtung des Fahrzeugs außerhalb der Kran-Seitenplatten (18, 20); und
- Montieren der zweiten Teile (18b, 20b) der Kran-Seitenplatten (18, 20) an den ersten Teilen (18a, 20a) ohne zwischenzeitliche Demontage der weiteren Fahrzeugaggregate (104).
